# EUROPÄISCHE PATENTSCHRIFT

(11) **EP 2 724 891 B1**
(45) Veröffentlichungstag und Bekanntmachung des Hinweises auf die Patenterteilung: **30.12.2015**
(21) Anmeldenummer: 13004741.8
(22) Anmeldetag: 01.10.2013
(51) Int. Cl.: B60R 5/04

(54) **Kraftfahrzeug**
Motor vehicle
Véhicule automobile

(30) Priorität: 26.10.2012 DE 102012021098
(43) Veröffentlichungstag der Anmeldung: 30.04.2014
(73) Patentinhaber: Daimler AG, 70327 Stuttgart (DE)
(72) Erfinder: Kerner, Wolfgang, 72184 Eutingen (DE); Millerferli, Klaus, 73635 Rudersberg (DE)
(74) Vertreter: JENSEN & SON

(56) Entgegenhaltungen:
- DE-A1- 10 259 705
- DE-T2- 69 403 186

## Beschreibung

Die vorliegende Erfindung betrifft ein Kraftfahrzeug mit einer oben gelenkig gelagerten Heckklappe gemäß dem Oberbegriff des Anspruchs 1.

Aus der DE 694 03 186 T2 ist ein gattungsgemäßes Kraftfahrzeug mit einer oben gelenkig gelagerten Heckklappe und einem sich in Fahrtrichtung von der Heckklappe erstreckenden Laderaum bekannt. Ebenfalls vorgesehen ist eine ein Netz aufweisende Vorrichtung zum Halten von Gepäckstücken, die auf dem Boden des Laderaums angeordnet sind. Ein hinterer Abschnitt des Netzes der Vorrichtung ist dabei mit der Heckklappe nahe ihrem unteren Rand verbunden, wogegen seitliche Enden des vorderen Abschnitts des Netzes jeweils an einer Lasche angeordnet sind, die jeweils auf einer im Wesentlichen vertikalen Führung gleitet und jeweils durch einen seitlichen Zugstab mit der Heckklappe verbunden ist. Hierdurch soll insbesondere ein leichteres Beladen des Kraftfahrzeuges erzielt werden.

Aus der DE 696 33 184 T2 ist ein netzartiges Gepäckrückhaltesystem für Kraftfahrzeuge mit einer Ladefläche mit einem vorderen Bereich und mit einer Außentür mit Scharnieren bekannt, die von außerhalb des Fahrzeugs geöffnet wird, um Zugang zur Ladefläche erhalten zu können. Das Rückhaltesystem umfasst dabei ein nicht einziehbares Netzglied mit festen Abmessungen in Längs- und Querrichtung, die eine Länge und eine Breite umfassen, wobei das Netzglied abnehmbar mit in Längsrichtung verlängerbaren Schnüren verbunden ist, welche die gegenüberliegenden Längsseiten des Netzgliedes halten und sich zwischen einem ersten Punkt proximal zum vorderen Bereich der Ladefläche und einem zweiten Punkt an der Tür erstrecken. Das Netzglied kann dabei mit der Tür angehoben und abgesenkt werden, um für Lade- und Entladezwecke Zugang zur Ladefläche zu erhalten und um das Gepäck auf der Ladefläche zu fixieren, sofern die Tür geschlossen ist. Ebenfalls vorgesehen ist ein Mittel zum Verstellen einer verlängerbaren Länge der Schnüre zwischen dem ersten Punkt und dem zweiten Punkt bei gleichzeitigem Aufrechterhalten erheblicher Spannungen im Netz, um Gepäckstücke unterschiedlicher Größe aufnehmen zu können. Ebenfalls vorgesehen ist ein Mittel zum Aufrechterhalten einer erheblichen Längsspannung in den verlängerbaren Schnüren, um das Netzglied eng an das Gepäck anzupassen und die Bewegung des Gepäcks zu verhindern. Hierdurch soll insbesondere ein Gepäckrückhaltesystem geschaffen werden, das Lasten zufriedenstellend daran hindert, bei Frontal-Seiten- und/oder Heckaufprallen in den Fahrgastraum eines Kraftfahrzeuges einzudringen und dadurch vorteilhafter Weise für die Sicherheit von Fahrgästen sorgt.

Insbesondere bei einem Öffnen einer vergleichsweise steilen PKW-Heckklappe kann das im Laderaum hochgestapelte Ladegut unkontrolliert herausfallen, sofern es nicht entsprechend gesichert ist. Zu dieser Ladegutsicherung gibt es die zuvor beschriebenen oder generell bekannten Sicherungsnetze, die an einem Laderaumboden verankert werden und das Ladegut dadurch sichern. Sehr hohes Ladegut oder viele übereinander gestapelte Koffer können dabei jedoch nur schwer gesichert werden, wobei erschwerend hinzukommt, dass bei einem Entnehmen von unter dem Sicherungsnetz verspanntem Ladegut zunächst das Sicherungsnetz zumindest teilweise entfernt und anschließend wieder verspannt werden muss.

Die vorliegende Erfindung beschäftigt sich daher mit dem Problem, für ein Kraftfahrzeug der gattungsgemäßen Art eine verbesserte Ausführungsform anzugeben, die sich einerseits durch eine leichte Bedienbarkeit und andererseits eine hohe Funktionalität auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine ein Netz aufweisende Vorrichtung zum Halten von Gepäckstücken in einem sich in Fahrtrichtung vor einer Heckklappe erstreckenden Laderaum eines Kraftfahrzeuges so auszugestalten, dass diese bzw. das Netz derselben zwischen einer Bereitschaftsstellung und einer Arbeitsstellung verstellbar ist, wobei es in der Bereitschaftsstellung ein ungehindertes Be- und Entladen des Laderaums ermöglicht, während es in der Arbeitsstellung das Ladegut im Laderaum sichert und insbesondere ein gefahrloses Öffnen einer den Laderaum nach hinten abschließenden Heckklappe ermöglicht, ohne dass dabei befürchtet werden muss, dass das übereinander im Laderaum gestapelte Ladegut herunterfällt. Erfindungsgemäß ist hierzu das Netz der Vorrichtung mit seinen vorderen oberen Enden über seitliche Gurte mit den D-Säulen des Kraftfahrzeuges verbunden, das heißt mit den in Fahrtrichtung gesehen letzten Säulen des Kraftfahrzeuges, wobei dieses Netz wie zuvor beschrieben zwischen der Bereitschaftsstellung und der Arbeitsstellung verstellbar ist. In der Bereitschaftsstellung ist es mit einem hinteren unteren Rand mit der Heckklappe verbunden, wogegen es in der Arbeitsstellung mit dem hinteren unteren Rand mit einer Ladekante des Laderaums oder einem Laderaumboden verbunden und dort fixiert ist, so dass bei einem Öffnen der Heckklappe kein Ladegut ungewollt aus dem Laderaum fallen kann. Durch ein Fixieren des hinteren unteren Randes des Netzes entweder am Bereich der Ladekante oder aber an der Heckklappe kann so ein äußerst funktionales Gepäcksicherungssystem geschaffen werden, welches einerseits die Fahrsicherheit erhöht und andererseits ein gefahrloses Öffnen der nach oben schwenkenden Heckklappe ermöglicht. Eine Anschlaghöhe der beiden vorderen oberen Ecken des Netzes an den D-Säulen hängt dabei von der Höhe des gewünschten Schutzniveaus ab. Durch die Verbindung des Netzes mit seinem hinteren unteren Rand mit der Heckklappe kann diese problemlos geöffnet werden, wobei sich dann das Netz außerhalb eines Arbeitsbereichs der die Heckklappe öffnenden Person befindet und dadurch diese nicht stört. Möchte ein Benutzer das Netz, das heißt die Vorrichtung nicht gänzlich aus dem Laderaum entfernen, bleibt das Netz, das in der Regel einen Befestigungshaken aufweist, fest in einer ösenartigen Aufnahme einer Fahrzeugheckklappe verliersicher gehalten.

Zweckmäßig weist das Netz an seinem hinteren unteren Rand einen U-förmigen drahtartigen Beschlag auf, der den Rand einfasst und mit seinen U-Schenkeln entlang der beiden Netzseitenkanten geführt ist. Durch den erwähnten Beschlag kann das Netz von einem Benutzer besonders einfach und zugleich sicher gehalten und insbesondere zwischen seiner Arbeitsstellung und seiner Bereitschaftsstellung verstellt werden, wobei die beiden U-Schenkel das daran angeordnete Netz flächenartig aufspannen und zugleich zu einer Fixierung des Netzes, beispielsweise an einem unteren Bereich der D-Säulen oder an der Heckklappe genutzt werden können. Eine Verbindung der U-Schenkel mit der Kraftfahrzeugkarosserie, das heißt beispielsweise mit der Heckklappe oder den D-Säulen, kann dabei über eine einfache, aber zugleich hochfunktionale Clipsverbindung ermöglicht werden.

Bei einer weiteren vorteilhaften Ausführungsform der erfindungsgemäßen Lösung ist in etwa mittig des Beschlages ein ein erstes Hakenelement aufweisender Haltegriff angeordnet, wobei das erste Hakenelement und der Haltegriff im Wesentlichen rechtwinkelig zueinander ausgerichtet sind. Der Haltegriff kann dabei in der Art eines Kunststoffspritzgussteiles ausgebildet sein und mit dem ersten Hakenelement in einfacher Weise verclipst werden. Im Bereich der kraftfahrzeugseitigen Ladekante ist nun erfindungsgemäß ein in diese versenktes zweites Hakenelement vorgesehen, das mit dem ersten Hakenelement verhakbar, das heißt fixierbar ist und dessen Hakenkontur nach oben weist und dessen Hakenmaul in Fahrtrichtung nach vorne offen ist, so dass bei einem Öffnen der Heckklappe und bei einem Drücken des Ladeguts gegen das Netz dieses sicher über die beiden Hakenelemente verankert bleibt. Mittig des Beschlages besitzt dieser somit eine in der Seitenansicht hakenförmige Ausbildung, wobei der erste Haken aus zwei seitlichen, die typische Hakenform erzeugenden Schenkel mit jeweils zwei unter 90° zueinander stehenden Schenkelabschnitten und eine die beiden Schenkel verbindenden Quertraverse besteht. Die Quertraverse besitzt dabei eine Länge von ca. 80 mm. Auf die beiden, den horizontalen Anteil des ersten Hakenelements ausmachenden Schenkelabschnitte kann bevorzugt ein Kunststoffgriff, das heißt der Haltegriff, aufgeschoben bzw. aufgeclipst werden. Über diesen Haltegriff kann in der Art einer Einhandbewegung der Beschlag und somit der untere Netzbereich erfasst und die Quertraverse in das zweite in die Ladekante integrierte Hakenelement geschoben und dort verhakt werden. Über die Zugkraft des elastisch aufgebauten Netzes bleibt dabei die Hakenverbindung üblicherweise montagestabil. Da eine Belastung durch das Ladegut immer nach außen wirkt, ist das zweite Hakenelement mit seinem Hakenmaul nach vorne gerichtet, wodurch auch unter Last ein Öffnen der Hakenpaarung ausgeschlossen werden kann.

Zweckmäßig sind längsendseitig der U-Schenkel Haltegriffe, insbesondere pilzkopfförmige Haltegriffe angeordnet. Die pilzkopfartigen Haltegriffe können beispielsweise mittels entsprechender Kunststoffbeschläge realisiert werden, die nicht nur die Bediensicherheit erhöhen, sondern einem Benutzer auch die Möglichkeit bieten, mit der bedienenden Hand den Haltegriff zu ergreifen und über eine elastische Deformation der U-Schenkel des Beschlages in Richtung der Fahrzeugmitte diese aus einer entsprechenden, im unteren Bereich der jeweiligen D-Säule angeordneten Clipsverbindung zu lösen. Werden die beiden freien Enden des Beschlages bzw. der U-Schenkel wieder entlastet, so werden die freien Enden über die Rückstellkraft des Beschlages in den Clipsverbindungen gehalten bzw. in diese gedrückt, wodurch insbesondere verhindert werden kann, dass wegrollendes Ladegut seitlich aus dem Netz entweichen kann. Dies wird zudem auch durch die steife Struktur des Beschlages und die den Beschlag letztendlich aufnehmenden Clipsverbindungen bewirkt.

Zweckmäßig weist das Netz zweiseitige Gurte auf, die einen Ends an den D-Säulen des Kraftfahrzeuges anbindbar sind und anderen Ends an dem U-förmigen Beschlag angebunden sind, wobei das Netz mit seinen vorderen oberen Enden lösbar an den jeweiligen Gurt angebunden ist. Das Netz ist dabei zumindest in einem unteren Drittel fest mit den seitlichen Gurten verbunden, insbesondere vernäht, wobei es in einem oberen Drittel durch Lösen der oberen Ecken von den Gurten nach unten umschlagbar ist und dadurch eine reduzierte Ladebarriere ermöglicht. Damit der Einkauf über diese Ladebarriere gehoben werden kann, können somit die äußeren Zipfel, das heißt die vorderen oberen Ecken des Netzes aushängbar gestaltet sein, so dass bei Bedarf das obere Drittel des Netzes analog einer großen Klappe durch den Benutzer nach unten umgeklappt werden kann. Nunmehr kann das Ladegut mühelos über die nun deutlich abgesenkte Ladebarriere, die durch die Netzbiegekante gebildet wird, gehoben werden. Im Bereich dieser Netzbiegekante sollte vorzugsweise ein zusätzliches, horizontales Verstärkungsband in das Netz eingenäht werden. Bei Bedarf kann das Netz auch wieder hochgeklappt werden, wie es beispielsweise für den Anwendungsfall von Reisegepäck erforderlich ist. Für das schnelle Lösen der oberen Ecken des Netzes eignen sich insbesondere Magnetverbindungen hervorragend, wobei hier Magnete jeweils in einem mit dem Netz verbundenen Kunststoffknopf gehalten werden, der ähnlich dem Verriegelungssystem einer Wohnungstürkette in einem entsprechenden Bajonettschlitz des korrespondierenden Beschlages über die nun greifende Magnetkraft gehalten wird. Selbstverständlich sind auch bekannte Drehknebelverschlüsse oder Hakenverschlüsse oder Klett- bzw. Knöpfverschlüsse denkbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Schrägansicht von unten auf ein erfindungsgemäßes Kraftfahrzeug mit einem sich in seiner Bereitschaftsstellung befindlichen Netz einer Vorrichtung zum Halten von Gepäckstücken,
- Fig. 2: eine Darstellung wie in Fig. 1, jedoch bei sich in seiner Arbeitsstellung befindlichem Netz und umgeklapptem oberen Bereich,
- Fig. 3: eine Darstellung wie in Fig. 2, jedoch in teilweise geschnittener Ansicht,
- Fig. 4: eine Längsschnittdarstellung durch das erfindungsgemäße Kraftfahrzeug.

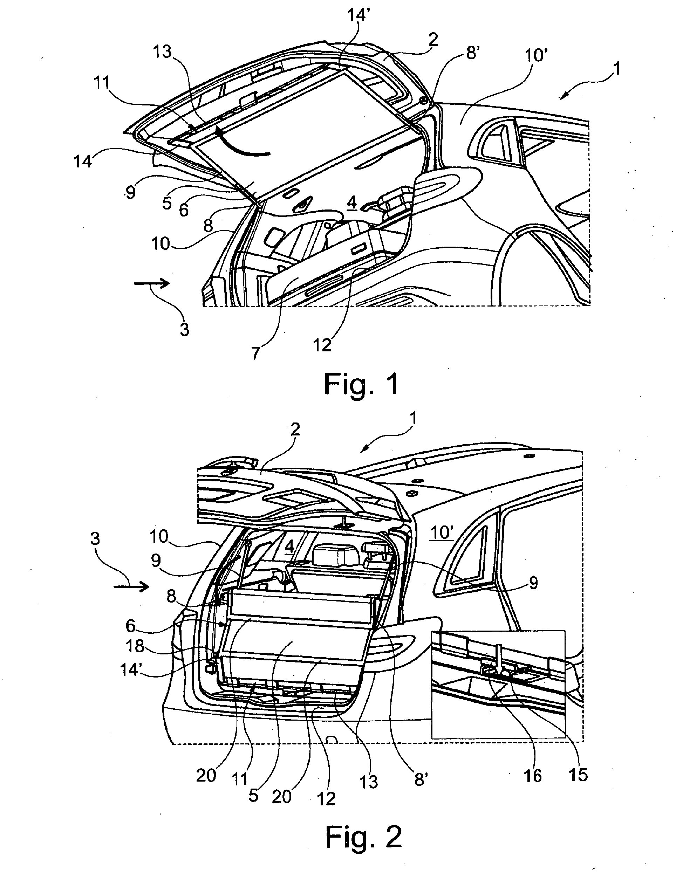

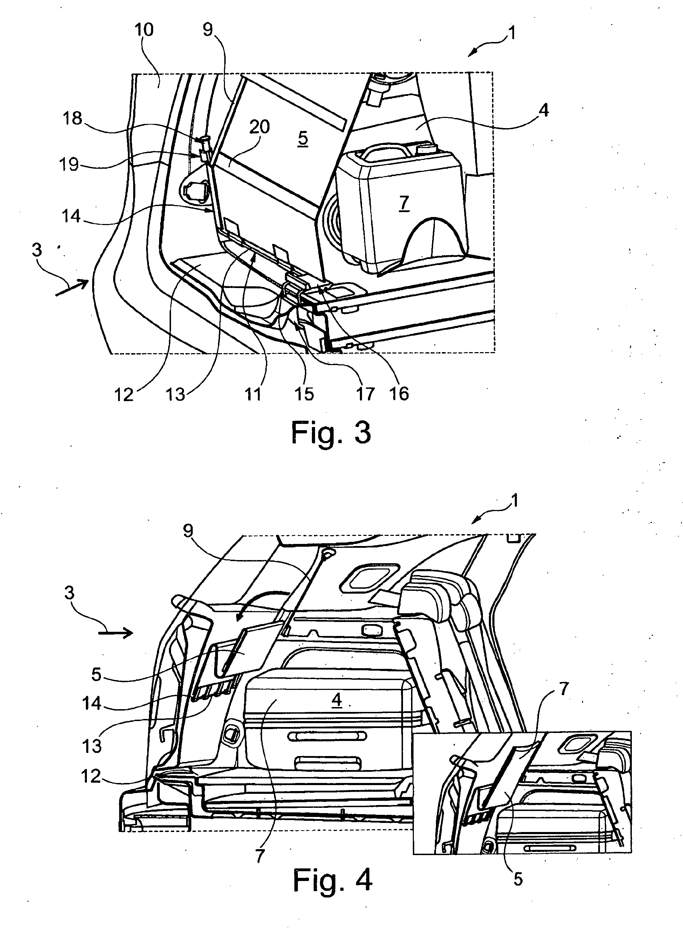

Entsprechend den Figuren 1 bis 4, weist ein erfindungsgemäßes Kraftfahrzeug 1 eine oben gelenkig gelagerte Heckklappe 2 und einen sich in Fahrtrichtung 3 vor der Heckklappe 2 erstreckenden Laderaum 4 auf. Ebenfalls vorgesehen ist eine mit einem Netz 5 ausgestattete Vorrichtung 6 zum Halten von Ladegut 7 (vergleiche die Figuren 1, 3 und 4). Erfindungsgemäß ist nun das Netz 5 mit seinen vorderen oberen Enden 8 und 8' über seitliche Gurte 9, 9' mit D-Säulen 10, 10' des Kraftfahrzeuges 1 verbunden. Zusätzlich ist das Netz 5 erfindungsgemäß zwischen einer Bereitschaftsstellung (vergleiche Figur 1 und 4) und einer Arbeitsstellung (vergleiche Figuren 2 und 3) verstellbar, wobei es in der Bereitschaftsstellung mit einem hinteren unteren Rand 11 mit der Heckklappe 2 und in der Arbeitsstellung mit dem hinteren unteren Rand 11 mit einer Ladekante 12 des Laderaums 4 oder mit diesem selbst verbunden und dort fixiert ist, so dass bei einem Öffnen der Heckklappe 2 kein Ladegut 7 ungewollt aus dem Laderaum 4 fallen kann. In seiner Bereitschaftsstellung ist das Netz 5 und damit auch die Vorrichtung 6 somit nicht hindernd an der Heckklappe 2 angelenkt und ermöglicht einen freien Zugang zum Laderaum 4. In seiner Arbeitsstellung hingegen ist das Netz 5 und damit auch die Vorrichtung 6 derart aufgespannt, dass es eine nach hinten abschließende Wand des Laderaums 4 bildet, die sich jedoch nicht mit der Heckklappe 2 öffnet, sondern in ihrem den Laderaum 4 begrenzenden Zustand verbleibt und dadurch ein unerwünschtes Herausfallen von Ladegut 7 aus dem Laderaum 4 beim Öffnen der Heckklappe 2 verhindert.

An seinem hinteren unteren Rand 11 besitzt das Netz 5 einen U-förmigen und drahtartigen Beschlag 13, der den Rand 11 einfasst und mit seinen U-Schenkeln 14, 14' entlang der beiden Netzseitenkanten geführt ist. In etwa mittig des Beschlages 13 ist dabei ein ein erstes Hakenelement 15 aufweisender Haltegriff 16 angeordnet, wobei das erste Hakenelement 15 und der Haltegriff 16 im Wesentlichen rechtwinkelig zueinander stehen, wie dies beispielsweise gemäß der Figuren 2 und 3 dargestellt ist.

Im Bereich der kraftfahrzeugseitigen Ladekante 12 ist ein in diese versenktes zweites Hakenelement 17 vorgesehen, das mit dem ersten Hakenelement 15 verhakbar ist und dessen Hakenkontur nach oben weist. Ein Hakenmaul des zweiten Hakenelementes 17 ist dabei in Fahrtrichtung 3 nach vorne und unten offen, so dass bei einem Öffnen der Heckklappe 2 und bei einem Drücken des Ladeguts 7 gegen das Netz 5 dieses sicher verankert bleibt und das unerwünschte Herausfallen des Ladegutes 7 aus dem Laderaum 4 verhindert wird.

Neben den beiden Hakenelementen 15 und 17 können in einem unteren Bereich der beiden D-Säulen 10, 10' Clipselemente 19 angeordnet sein, in welchen der jeweils zugewandte U-Schenkel 14, 14' des Beschlages 13 einclipsbar ist, wie dies gemäß der Figur 3 dargestellt ist. In diesem Zustand wird zudem ein seitliches Herausrollen von insbesondere kleinerem Ladegut 7 verhindert. Längsendseitig der U-Schenkel 14, 14' sind wiederum Haltegriffe 18, insbesondere pilzkopfförmige Haltegriffe, angeordnet, die zum einen die spitzen Enden der U-Schenkel 14, 14' abdecken und zum anderen einen Griff zum Lösen der U-Schenkel 14, 14' aus den zugehörigen Clipselementen 19 bieten. Die Clipselemente 19 sind somit eine zusätzliche Verankerung des Beschlages 13 und damit des Netzes 5 in dessen Arbeitsstellung. Ähnliche Clipselemente können auch im Bereich der Heckklappe 2 angeordnet sein.

Betrachtet man insbesondere die Figuren 2 und 3, so kann man erkennen, dass das Netz 5 zwei seitliche Gurte 9, 9' aufweist, die einen Ends, das heißt an einem oberen Ende, an den D-Säulen 10, 10' des Kraftfahrzeuges 1 anbindbar sind und die andererseits an dem U-förmigen Beschlag 13 angebunden sind, wobei das Netz 5 mit seinen vorderen oberen Enden 8, 8' lösbar an den jeweiligen Gurt 9, 9' angebunden ist. Eine derartige Lösbarkeit kann beispielsweise über Magnetverschlüsse, Klettverschlüsse oder Knöpfverschlüsse realisiert werden.

Soll der Laderaum 4 nicht bis zur Höhe der Kopfstützen oder bis ganz nach oben nach hinten durch das Netz 5 abgedeckt werden, ist es möglich, die oberen Ecken 8, 8' des Netzes 5 von den zugehörigen Gurten 9, 9' zu lösen und beispielsweise das obere Drittel des Netzes 5, wie dies gemäß der Figur 2 gezeigt ist, nach unten umzuschlagen. Hierdurch kann auch eine deutlich niedrigere Ladebarriere erzielt werden, wobei im Bereich der Knickkante vorzugsweise eine Verstärkung 20 eingenäht ist. Derartige Verstärkungen können selbstverständlich auch an anderen Stellen, insbesondere randseitig des Netzes vorgesehen werden. Soll der Laderaum 4 wieder gänzlich verschlossen werden bzw. gesichert werden, so kann das obere Drittel nach oben geschlagen werden und die oberen Ecken 8, 8' wieder mit den zugehörigen Gurten 9, 9' verbunden werden. In ähnlicher Weise lösbar verbunden können auch die Gurte 9, 9' mit den jeweiligen D-Säulen 10, 10' sein, das heißt also insbesondere über Magnetverschlüsse, Knöpfverschlüsse oder Klettverschlüsse. Selbstverständlich sind auch sämtliche Arten von Hakenverschlüssen denkbar.

Um dem Netz 5 an seinem unteren Rand 11 eine möglichst rechteckige Form geben zu können, sind die U-Schenkel 14, 14' des Beschlages 13 mit einem Innenradius von ca. 6 mm abgewinkelt und dadurch nahezu rechtwinkelig mit äußerst kleinem Radius abgebogen. Unter Belastung des Netzes durch verrutschendes Ladegut stützen sich die U-Schenkel mit ihren winkeligen Elementen an der Fahrzeugstruktur ab.

Die Aufnahme des Beschlages 13 an der Heckklappe 2 kann dabei der Aufnahme an der Ladekante 12 ähneln, wobei auch hier die U-Schenkel 14, 14' durch entsprechende Clipsverbindungen gehalten werden können und das mittig des Beschlages 13 angeordnete erste Hakenelement 15 in einem komplementär dazu ausgebildeten und nicht näher bezeichneten Beschlag an einer Heckklappeninnenverkleidung gehalten wird. Aufgrund der Bewegungskinematik der Heckklappe 2 muss jedoch beachtet werden, dass die Aufnahme des Beschlages 13 nicht an einer unteren Heckklappenkante positioniert wird, da dies ein automatisch mit dem Schließen der Heckklappe 2 verbundenes Spannen des Netzes 5 bedeuten würde. Aufgrund unterschiedlicher Bewegungsbahnen von Heckklappe 2 und dem gleichzeitig nachgeführten Netz 5 kann es zu einer Längung des Netzes 5 von bis zu 300 mm kommen, was jedoch vermieden werden muss. Die Aufnahme an der Heckklappe 2 muss deshalb um ein entsprechendes Ausgleichsmaß in Richtung eines Heckfensters verlagert werden, so dass bei vollständig geöffneter Heckklappe 2 eine nur geringe Spannkraft auf das Netz 5 ausgeübt wird. Hierbei ist auch zu beachten, dass eine zu große Zugkraft auf das Netz 5 letztendlich die Heckklappe 2 wieder schließen würde und somit keine stabile Endlage gefunden werden kann. Bei geöffneter Heckklappe 2 ist das Netz 5 vom Benutzer und von unten aus gesehen glatt gezogen. Damit auch größere Benutzer mit ihrem Kopf nicht das Netz 5 berühren, kann beispielsweise der Beschlag 13 über entsprechende Clipsverbindungen an der Heckklappe 2 festgelegt werden, wodurch ein deutlicher Raumgewinn bewirkt werden kann. In diesem Fall wird das Netz 5 für den Anwendungsfall des Urlaubsgepäcks immer diskret an der geöffneten Heckklappe 2 in seiner Bereitschaftsstellung gehalten, wodurch es den Beladungsvorgang nicht stört. Ist der Beladungsvorgang abgeschlossen, kann der Benutzer das Netz 5 von der geöffneten Heckklappe 2 lösen und dieses über das erste Hakenelement 15 in das zweite an der Ladekante 12 angeordnete Hakenelement 17 einhängen. Mit dem Einhängen des Netzes 5 erhält dieses die erforderliche Vorspannung zur Sicherung des Ladegutes 7. Ein zusätzliches seitliches Einclipsen des Beschlages 13 über die U-Schenkel 14, 14' in die zugehörigen Clipsverbindungen 19 ist optional und vom jeweiligen Beladungsfall abhängig.

Verbleibt das Netz 5 dauerhaft an der Heckklappe 2 so bildet sich zwischen dem Netz 5 und der im Allgemeinen gekrümmten Heckklappenverkleidung ein sichelförmiger Spalt, der zusätzlich zum Verstauen von leichtem Ablagegut, beispielsweise einer Warnweste, benutzt werden kann, ohne dass das Mehrgewicht den Türöffnungsmechanismus stört. Durch die vergleichsweise scharfe Abwinklung der U-Schenkel 14, 14' hinterlässt der Beschlag 13 optisch einen eckigen Eindruck, wobei bei Belastung des Netzes 5 durch Verrutschen des Ladeguts 7 sich diese ausgesteifte Ecke an der Blechstruktur des Kraftfahrzeuges abstützt, wobei ein Übergang zwischen den D-Säulen 10, 10' und einem Laderaumboden einen weitaus größeren Radius mit entsprechender Materialüberdeckung aufweist und somit eine ideale Abstützung bei beladungsbedingten Netzlasten bietet.

Gemäß der Figur 4 ist in der großen Darstellung das Netz 5 in seiner Bereitschaftsstellung gezeigt, jedoch mit ein- bzw. umgeklapptem oberen (Bereich) Drittel. In der kleineren Detaildarstellung hingegen ist das obere Drittel des Netzes 5 ausgeklappt, so dass die beiden oberen Ecken 8, 8' an den jeweiligen Gurten 9, 9' befestigt sind.

Mit dem erfindungsgemäßen Kraftfahrzeug 1 und insbesondere auch mit dem erfindungsgemäßen Netz 5 kann ein komfortables und zugleich sicheres Be- und Entladen eines Laderaums 4 des Kraftfahrzeugs 1 erreicht werden, wobei das Netz 5 und die Vorrichtung 6 beim Öffnen der Heckklappe 2 ein Herausfallen von Ladegut 7 aus dem Laderaum 4 unterbinden. Durch eine vergleichsweise hohe Flexibilität des Netzes 5, insbesondere durch ein Abklappen desselben im oberen Drittel, lässt sich eine individuell hinsichtlich ihrer Höhe einstellbare Ladebarriere erzielen, die den Laderaum 4 wannenartig nach hinten abschließt. Generell kann die erfindungsgemäße Vorrichtung 6 vergleichsweise kostengünstig angeboten werden, bietet aber aufgrund des hohen Zusatznutzens einen wesentlichen Vorteil für den Kunden.

## Patentansprüche

1. Kraftfahrzeug (1) mit einer oben gelenkig gelagerten Heckklappe (2) und einem sich in Fahrtrichtung (3) vor der Heckklappe (2) erstreckenden Laderaum (4) und mit einer ein Netz (5) aufweisenden Vorrichtung (6) zum Halten von Ladegut (7), **dadurch gekennzeichnet, dass**
- das Netz (5) mit seinen vorderen oberen Ecken (8,8') über seitliche Gurte (9,9') mit D-Säulen (10,10') des Kraftfahrzeugs (1) fest verbunden ist,
- das Netz (5) zwischen einer Bereitschaftsstellung und einer Arbeitsstellung verstellbar ist, wobei es in der Bereitschaftsstellung mit einem hinteren unteren Rand (11) mit der Heckklappe (2) und in der Arbeitsstellung mit dem hinteren unteren Rand (11) mit einer Ladekante (12) des Laderaums (4) verbunden und dort fixiert ist, so dass bei einem Öffnen der Heckklappe (2) kein Ladegut (7). ungewollt aus dem Laderaum (4) fallen kann.

2. Kraftfahrzeug nach Anspruch 1,
**dadurch gekennzeichnet, dass**
das Netz (5) an seinem hinteren unteren Rand (11) einen U-förmigen drahtartigen Beschlag (13) aufweist, der den Rand (11) einfasst und mit seinen U-Schenkeln (14,14') entlang der beiden Netzseitenkanten geführt ist.

3. Kraftfahrzeug nach Anspruch 2,
**dadurch gekennzeichnet, dass**
in etwa mittig des Beschlages (13) ein ein erstes Hakenelement (15) aufweisender Haltegriff (16) angeordnet ist, wobei das erste Hakenelement (15) und der Haltegriff (16) im Wesentlichen rechtwinklig zueinander ausgerichtet sind.

4. Kraftfahrzeug nach Anspruch 3,
**dadurch gekennzeichnet, dass**
im Bereich der kraftfahrzeugseitigen Ladekante (12) ein in diese versenktes zweites Hakenelement (17) vorgesehen ist, das mit dem ersten Hakenelement (15) verhakbar ist und dessen Hakenkontur nach oben weist und dessen Hakenmaul in Fahrtrichtung (3) nach vorne offen ist, so dass bei einem Öffnen der Heckklappe (2) und bei einem Drücken des Ladeguts (7) gegen das Netz (5) dieses sicher verankert bleibt.

5. Kraftfahrzeug nach einem der Ansprüche 2 bis 4,
**dadurch gekennzeichnet, dass**
an einem unteren Bereich der beiden D-Säulen (10,10') Clipselemente (19) angeordnet sind, in welche der jeweils zugewandt U-Schenkel (14,14') des Beschlages (13) einclipsbar ist.

6. Kraftfahrzeug nach einem der Ansprüche 2 bis 5,
**dadurch gekennzeichnet, dass**
längsendseitig der U-Schenkel (14,14') Haltegriffe (18), insbesondere pilzkopfförmige Haltegriffe angeordnet, sind.

7. Kraftfahrzeug nach einem der Ansprüche 1 bis 6,
**dadurch gekennzeichnet, dass**
das Netz (5) zwei seitliche Gurte (9,9') aufweist, die einen Ends an den D-Säulen (10,10') des Kraftfahrzeugs (1) anbindbar sind und anderen Ends an dem U-förmigen Beschlag (13) angebunden sind, wobei das Netz (5) mit seinen vorderen oberen Ecken (8,8') lösbar an dem jeweiligen Gurt (9,9') angebunden ist.

8. Kraftfahrzeug nach Anspruch 7,
**dadurch gekennzeichnet, dass**
das Netz (5) zumindest in einem unteren Drittel fest mit den seitlichen Gurten (9,9') verbunden, insbesondere vernäht, ist, wobei es in einem oberen Drittel durch Lösen der oberen Ecken (8,8') von den Gurten (9,9') nach unten umschlagbar ist und dadurch eine reduzierte Ladebarriere ermöglicht.

9. Kraftfahrzeug nach Anspruch 7 oder 8,
**dadurch gekennzeichnet, dass**
die oberen Ecken (8,8') des Netzes (5) mit den seitlichen Gurten (9,9') über Magnetverschlüsse, Klettverschlüsse oder Knöpfverschlüsse verbunden sind.

10. Kraftfahrzeug nach einem der Ansprüche 2 bis 9,
**dadurch gekennzeichnet, dass**
die U-Schenkel (14,14') des drahtartigen Beschlags (13) mit einem Innenradius von ca. 6 mm abgewinkelt sind.

## Claims

1. Motor vehicle (1) with a tailgate (2) mounted in an upwardly articulated manner and a cargo space (4) extending in front of the tailgate (2) in the direction of travel and with a device (6), having a net (5), for holding cargo (7), **characterised in that**
- the net (5) is fixedly connected with its front upper corners (8, 8') via side straps (9, 9') to D-pillars (10, 10') of the motor vehicle (1),
- the net (5) can be adjusted between a standby position and a working position, wherein it is connected in the standby position with a rear lower edge (11) to the tailgate (2) and in the working position with the rear lower edge (11) to a loading edge (12) of the cargo space (4) and is fixed there so that, when the tailgate (2) is opened, no cargo (7) can undesirably fall out of the cargo space (4).

2. Motor vehicle according to claim 1,
**characterised in that**
the net (5) has on its rear lower edge (11) a U-shaped wire-like fitting (13) which incorporates the edge (11) and is guided with its U legs (14, 14') along the two net side edges.

3. Motor vehicle according to claim 2,
**characterised in that**
a holding grip (16) having a first hook element (15) is arranged approximately in the centre of the fitting (13), wherein the first hook element (15) and the holding grip (16) are orientated substantially at a right angle to each other.

4. Motor vehicle according to claim 3,
**characterised in that**
in the region of the motor-vehicle-side loading edge (12) a second hook element (17) which can be lowered into said loading edge (12) is provided, which can be hooked with respect to the first hook element (15), and of which the hook contour points upwards and of which the hook mouth is open towards the front in the direction of travel (3), so that when the tailgate (2) is opened and when the cargo (7) is pressed against the net (5) the net (5) remains securely anchored.

5. Motor vehicle according to one of claims 2 to 4,
**characterised in that**
clip elements (19) are arranged on a lower region of the two D-pillars (10, 10'), into which the respectively facing U leg (14, 14') of the fitting (13) can be clipped.

6. Motor vehicle according to one of claims 2 to 5,
**characterised in that**
holding grips (18), in particular mushroom-head-shaped holding grips, are arranged on the longitudinal end side of the U legs (14, 14').

7. Motor vehicle according to one of claims 1 to 6,
**characterised in that**
the net (5) has two side straps (9, 9') which can be attached at one end to the D-pillars (10, 10') of the motor vehicle (1) and are attached at the other end to the U-shaped fitting (13), wherein the net (5) is releasably attached with its front upper corners (8, 8') to the respective strap (9, 9').

8. Motor vehicle according to claim 7,
**characterised in that**
the net (5) is connected at least in a lower third fixedly to the side straps (9, 9'), in particular being sewn, wherein in an upper third it can be flipped downwards by releasing the upper corners (8, 8') from the straps (9' 9') and thereby facilitates a reduced loading barrier.

9. Motor vehicle according to claim 7 or 8,
**characterised in that**
the upper corners (8, 8') of the net (5) are connected to the side straps (9, 9') via magnetic fasteners, hook and loop fasteners or button fasteners.

10. Motor vehicle according to one of claims 2 to 9,
**characterised in that**
the U legs (14, 14') of the wire-like fitting (13) are angled with an inner radius of approximately 6 mm.

## Revendications

1. Véhicule automobile (1) doté d'un hayon (2) relié par une charnière supérieure et un espace de chargement (4) s'étendant devant le hayon (2) dans la direction de marche (3) et d'un dispositif (6) présentant un filet destiné à retenir les bagages (7), **caractérisé en ce que**
- le filet (5) est relié à demeure à ses angles (8, 8') supérieurs avant au moyen de ceintures latérales (9, 9'), aux montants D (10, 10') du véhicule automobile,
- le filet (5) peut être réglé entre une position en attente et une position d'utilisation, ledit filet étant relié dans la position en attente par un bord inférieur arrière (11) au hayon (2) et dans la position d'utilisation par un bord inférieur arrière (11) à un bord de chargement (12) de l'espace de chargement (4) et y est fixé de sorte qu'au moment d'une ouverture du hayon (2) aucun bagage (7) ne puisse tomber accidentellement de l'espace de chargement (4).

2. Véhicule selon la revendication 1, **caractérisé en ce que** le filet (5) présente sur son bord (11) inférieur arrière une ferrure (13) filiforme en U qui entoure le bord (11) est guidé conjointement avec ses montants (14, 14') en U le long des deux arêtes latérales de filet.

3. Véhicule automobile selon la revendication 2, **caractérisé en ce qu'**approximativement au centre de la ferrure (13) est disposée une poignée (16) présentant un premier élément de crochet (15), le premier élément de crochet (15) et la poignée (16) étant sensiblement perpendiculaires l'un par rapport à l'autre.

4. Véhicule selon la revendication 3, **caractérisé en ce que** dans la zone de l'arête de chargement (12) côté véhicule automobile il est prévu un second élément de crochet (17) encastré dans celle-ci, qui peut s'encliqueter dans le premier élément de crochet (15) et dont le contour de crochet est orienté vers le haut et dont le bec de crochet est ouvert vers l'avant dans la direction de marche (3), de manière qu'au moment d'une ouverture du hayon (2) et en cas de pression des bagages (7) contre le filet (5) ledit crochet demeure fixement amarré.

5. Véhicule automobile selon l'une quelconque des revendications 2 à 4, **caractérisé en ce que** sur une zone inférieure des deux montants D (10,10') sont disposés des éléments de clips (19), dans lesquels le montant en U (14, 14') respectivement en regard de la ferrure (13) peut s'enclipser.

6. Véhicule selon l'une quelconque des revendications 2 à 5, **caractérisé en ce que** côté extrémité longitudinale des montants en U (14, 14') sont disposées des poignées (18), en particulier des poignées en forme de champignon.

7. Véhicule selon l'une quelconque des revendications 1 à 6, **caractérisé en ce que** le filet (5) présente deux ceintures (9, 9') latérales qui peuvent s'attacher d'une part aux montants D (10, 10') du véhicule automobile, et d'autre part qui sont reliées à la ferrure (13) en forme de U, le filet (5) étant relié amovible au moyen de ses angles supérieurs avant (8, 8') à la ceinture respective (9, 9').

8. Véhicule automobile selon la revendication 7, **caractérisé en ce que** le filet (5) est relié, en particulier cousu, au moins dans un tiers inférieur aux ceintures latérales (9, 9'), ledit filet dans un tiers supérieur pouvant être rabattu en libérant les angles supérieurs (8, 8') des ceintures (9, 9') vers le bas et permettant ainsi une barrière de chargement réduite.

9. Véhicule automobile selon la revendication 7 ou 8, **caractérisé en ce que** les angles supérieurs (8, 8') du filet (5) sont reliés aux ceintures latérales (9, 9') au moyen de fermetures magnétiques, de fermetures velcro ou encore de fermetures à bouton.

10. Véhicule automobile selon l'une quelconque des revendications 2 à 9, **caractérisé en ce que** les montants en U (14, 14') de la ferrure filiforme (13) sont coudés selon un rayon intérieur d'environ 6 mm.
